# EUROPEAN PATENT SPECIFICATION

(11) **EP 4 296 087 B1**
(45) Date of publication and mention of the grant of the patent: **25.03.2026**
(21) Application number: 22815877.0
(22) Date of filing: 20.05.2022
(51) Int. Cl.: B60C 9/08, B60C 9/09, B60C 15/00, B60C 9/10

(54) **MOTORCYCLE TIRE**
MOTORRADREIFEN
PNEU DE MOTOCYCLETTE

(30) Priority: 04.06.2021 JP 2021094566; 16.02.2022 JP 2022022192
(43) Date of publication of application: 27.12.2023
(73) Proprietor: Sumitomo Rubber Industries Ltd., Kobe-shi, Hyogo 651-0072 (JP)
(72) Inventor: YAMAMOTO, Takuya, Kobe-shi, Hyogo 651-0072 (JP); MATSUURA, Kota, Kobe-shi, Hyogo 651-0072 (JP)
(74) Representative: Manitz Finsterwald Patent- und Rechtsanwaltspartnerschaft mbB
(86) International application number: PCT/JP2022/020922
(87) International publication number: WO 2022/255126

(56) References cited:
- EP-A1- 1 982 847
- EP-B1- 3 421 268
- EP-B1- 3 730 313
- JP-A- 2003 515 487
- JP-A- 2007 210 535
- JP-A- 2008 307 933
- JP-A- 2008 307 933
- JP-A- 2009 126 422
- JP-A- 2013 067 185
- JP-A- 2016 037 087
- JP-A- 2017 534 527
- JP-A- 2018 177 021

## Description

### Technical Field

The present invention relates to tires for two-wheeled automotive vehicles.

### Background Art

When a two-wheeled automotive vehicle corners, the rider tilts the two-wheeled automotive vehicle to obtain sufficient camber thrust. A tire for a two-wheeled automotive vehicle is required to be excellent in cornering stability to achieve stable running in the tilted state. During straight running of a two-wheeled automotive vehicle, the two-wheeled automotive vehicle is almost upright. Stability during straight running is also required for a two-wheeled automotive vehicle. Japanese Laid-Open Patent Application Publication No. 2008-302871 discloses studies on a tire that realizes excellent cornering stability and straight running stability with improved handling stability. Related technologies are known from EP 3 730 313 B1, EP 1 982 847 A1, EP 3 421 268 B1, and JP 2008 307933 A.

### Citation List

### Patent Literature

PTL 1: Japanese Laid-Open Patent Application Publication No. 2008-302871

### Summary of Invention

### Technical Problem

While the performance of two-wheeled automotive vehicles has been enhanced, there has been a demand for a tire with improved handling performance, the tire making stable and smooth transition between straight running and cornering possible.

It is an intention of the inventors of the present invention to provide a tire for a two-wheeled automotive vehicle, the tire realizing excellent handling performance.

### Solution to Problem

The present invention is set out in the appended claims. A preferable tire for a two-wheeled automotive vehicle includes: a pair of beads; and a carcass that is extended on and between the beads. The carcass includes: a first ply including a plurality of first cords arranged in parallel; and a second ply layered outward of the first ply and including a plurality of second cords arranged in parallel. The first cords are inclined relative to an equator plane, and each of the first cords forms an angle θ1 relative to the equator plane, the angle θ1 being substantially 90°. The second cords are inclined relative to the equator plane, and each of the second cords forms an angle θ2 relative to the equator plane, the angle θ2 being greater than or equal to 65° and less than or equal to 85°.

### Advantageous Effects of Invention

In the above tire for a two-wheeled automotive vehicle, in the carcass, the angle formed by each first cord of the first ply relative to the equator plane is substantially 90°, and the angle formed by each first cord of the second ply relative to the equator plane is greater than or equal to 65° and less than or equal to 85°. The combination of the first ply and the second ply effectively contributes to favorable handling performance. This tire realizes excellent handling performance.

### Brief Description of Drawings

FIG. 1 is a sectional view showing part of a pneumatic tire according to one embodiment.
FIG. 2 is a cutaway sectional view showing part of the tire of FIG. 1.
FIG. 3 is an enlarged sectional perspective view of a carcass of the tire of FIG. 1.
FIG. 4 is a sectional view of a rubber sheet for forming a first ply of the carcass.
FIGS. 5A, 5B, and 5C are graphs each showing evaluation results of tires regarding their vertical stiffness constant.
FIGS. 6A, 6B, and 6C are graphs each showing evaluation results of the tires regarding their deflection amount.

### Description of Embodiments

Hereinafter, preferred embodiments are described in detail with appropriate reference to the drawings.

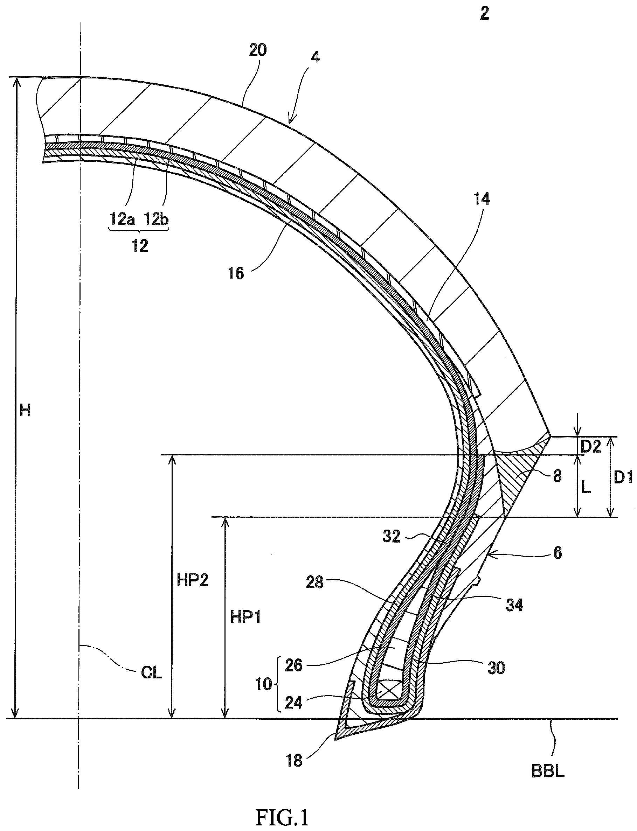

FIG. 1 shows a pneumatic tire 2. In FIG. 1, the up-down direction is the radial direction of the tire 2; the left-right direction is the axial direction of the tire 2; and the direction perpendicular to the plane of FIG. 1 is the circumferential direction of the tire 2. In FIG. 1, a one-dot chain line CL represents the equator plane of the tire 2. The shape of the tire 2, except for its tread pattern, is symmetric about the equator plane CL.

The tire 2 includes a tread 4, a pair of sidewalls 6, a pair of wings 8, a pair of beads 10, a carcass 12, a band 14, an inner liner 16, and a pair of chafers 18. The tire 2 is of a tubeless type. The tire 2 is intended for a two-wheeled automotive vehicle. The tire 2 is mounted to the front wheel of the two-wheeled automotive vehicle.

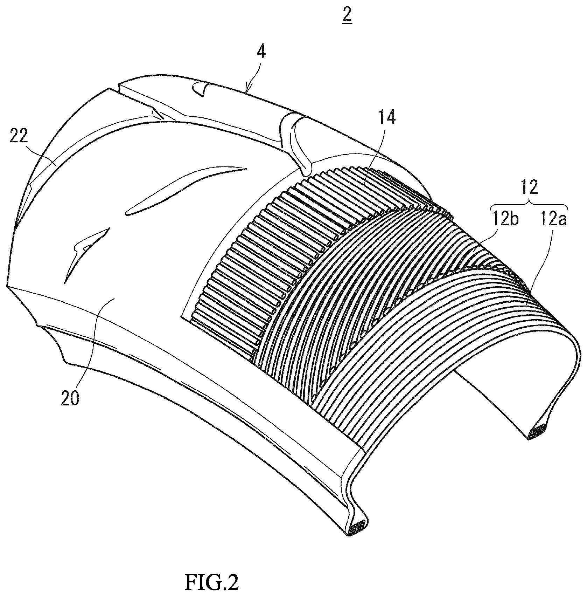

FIG. 2 is a cutaway sectional view showing part of the tire 2 of FIG. 1. FIG. 2 shows a state where part of the tread 4 is peeled off such that the carcass 12 and the band 14 are exposed. As described below, each of the carcass 12 and the band 14 includes cords. In FIG. 2, these cords are exposed.

The tread 4 has a shape protruding radially outward. The outer surface of the tread 4, which comes into contact with a road surface, is referred to as a tread surface 20. As shown in FIG. 2, grooves 22 are formed in the tread surface 20. The grooves 22 form a tread pattern. The tire 2 may be a slick tire with no grooves 22 formed in the tread surface 20. The tread 4 is made of a crosslinked rubber that is excellent in wear resistance, thermal resistance, and grip performance.

Each sidewall 6 extends substantially radially inward from the vicinity of an end of the tread 4. The sidewall 6 is made of a crosslinked rubber that is excellent in cut resistance and weather resistance. The sidewall 6 prevents damage to the carcass 12.

Each wing 8 is positioned between the tread 4 and the sidewall 6. The wing 8 is joined to each of the tread 4 and the sidewall 6. The wing 8 is made of a crosslinked rubber that is excellent in adhesiveness.

Each bead 10 is positioned radially inward of the sidewall 6. The bead 10 includes a core 24 and an apex 26. The core 24 is ring-shaped, and includes a wound non-stretchable wire. Typically the wire is made of steel. The apex 26 extends radially outward from the core 24. The apex 26 is tapered radially outward. The apex 26 is made of a crosslinked rubber having high hardness.

As shown in FIGS. 1 and 2, the carcass 12 includes a first ply 12a and a second ply 12b. Inward of the tread 4, the second ply 12b is layered outward of the first ply 12a. As shown in FIG. 1, each of the first ply 12a and the second ply 12b is extended on and between the beads 10 on both sides. The first ply 12a and the second ply 12b extend along the tread 4 and the sidewalls 6.

As shown in FIG. 1, the first ply 12a is turned up around each core 24 from the axially inner side toward the axially outer side. As a result of the first ply 12a turned up in this manner, the first ply 12a includes a main portion 28 and turned-up portions 30. The second ply 12b is turned up around each core 24 from the axially inner side toward the axially outer side. As a result of the second ply 12b turned up in this manner, the second ply 12b includes a main portion 32 and turned-up portions 34. The main portion 32 of the second ply 12b is layered outward of the main portion 28 of the first ply 12a. The second ply 12b need not be turned up around each core 24. The carcass 12 may include three or more plies.

As shown in FIGS. 1 and 2, the band 14 is positioned radially inward of the tread 4. The band 14 is layered radially outward of the carcass 12. The band 14 includes cords and a topping rubber. The cords are helically wound. The band 14 has a so-called jointless structure. The cords extend substantially in the circumferential direction. The angle of the cords relative to the circumferential direction is less than or equal to 5°, and more preferably less than or equal to 2°. Each cord is made of an organic fiber. Preferable examples of the organic fiber include a nylon fiber, a polyester fiber, a rayon fiber, a polyethylene naphthalate fiber, and an aramid fiber.

The inner liner 16 is positioned inward of the carcass 12. The inner liner 16 is jointed to the inner surface of the carcass 12. The inner liner 16 is made of a crosslinked rubber that is excellent in airtightness. A typical base rubber of the inner liner 16 is isobutylene-isoprene-rubber or halogenated isobutylene-isoprene-rubber. The inner liner 16 maintains the internal pressure of the tire 2.

Each chafer 18 is positioned in the vicinity of the bead 10. When the tire 2 is incorporated in a rim, the chafer 18 abuts on the rim. By the abutment, the vicinity of the bead 10 is protected. In this embodiment, the chafer 18 is made of a cloth and a rubber impregnated into the cloth. The chafer 18 may be made of a crosslinked rubber.

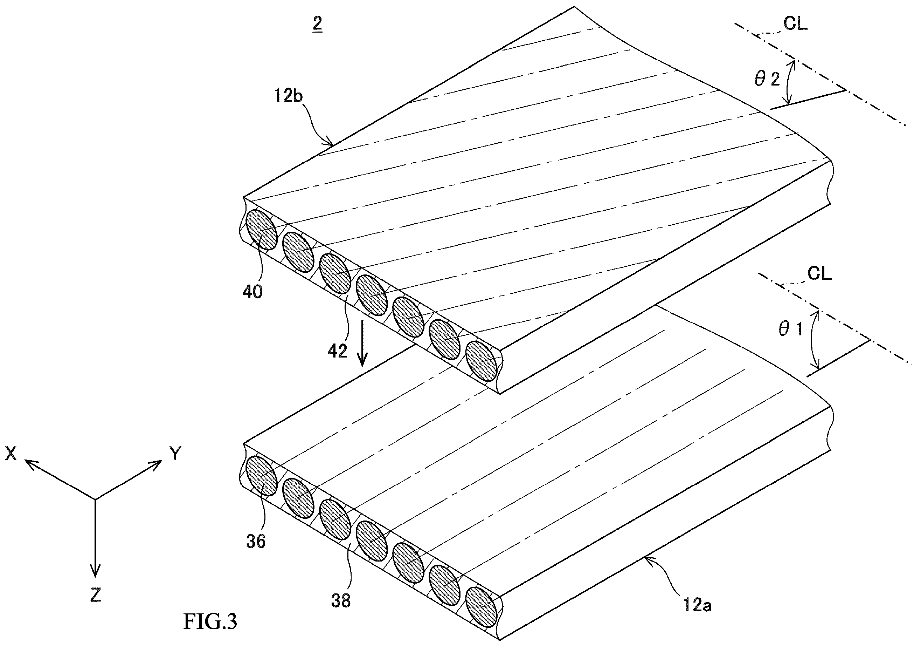

FIG. 3 shows an enlarged view of part of each of the first ply 12a and the second ply 12b. In FIG. 3, to facilitate the understanding, the first ply 12a and the second ply 12b are shown such that they are spaced apart from each other. In reality, as shown in FIG. 1, the first ply 12a and the second ply 12b are in contact with each other. In FIG. 3, an arrow x represents the circumferential direction of the tire 2; an arrow y represents the axial direction of the tire 2; and an arrow z represents the radial direction of the tire 2.

As shown in FIG. 3, the first ply 12a includes a large number of first cords 36 arranged in parallel and a topping rubber 38. Each first cord 36 is spaced apart from its adjacent first cords 36. The topping rubber 38 is present between each first cord 36 and its adjacent first cords 36. Each first cord 36 is inclined relative to the equator plane CL. In FIG. 3, a two-way arrow θ1 represents an angle formed by each first cord 36 relative to the equator plane CL. The angle θ1 is substantially 90°. To be specific, the angle θ1 is greater than or equal to 87° and less than or equal to 90°. Each first cord 36 is made of an organic fiber. Preferable examples of the organic fiber include a polyester fiber, a nylon fiber, a rayon fiber, a polyethylene naphthalate fiber, an aramid fiber, and a polyketone fiber.

It should be noted that in a case where the angle θ1 is not 90°, an acute angle that is one of the angles formed by the equator plane CL and the first cord 36 is measured as the angle θ1. In this case, in one circumferential direction of the tire 2, regardless of whether the first cord 36 is inclined toward one axially outer side or the other axially outer side, the value of the angle θ1 is taken as a positive value. In other words, the angle θ1 is the absolute value of the angle formed by the equator plane CL and the first cord 36.

As shown in FIG. 3, the second ply 12b includes a large number of second cords 40 arranged in parallel and a topping rubber 42. Each second cord 40 is spaced apart from its adjacent second cords 40. The topping rubber 42 is present between each second cord 40 and its adjacent second cords 40. Each second cord 40 is inclined relative to the equator plane CL. In FIG. 3, a two-way arrow θ2 represents an angle formed by each second cord 40 relative to the equator plane CL. The angle θ2 is greater than or equal to 65° and less than or equal to 85°. Each second cord 40 is made of an organic fiber. Preferable examples of the organic fiber include a polyester fiber, a nylon fiber, a rayon fiber, a polyethylene naphthalate fiber, an aramid fiber, and a polyketone fiber.

It should be noted that an acute angle that is one of the angles formed by the equator plane CL and the second cord 40 is measured as the angle θ2. In one circumferential direction of the tire 2, regardless of whether the second cord 40 is inclined toward one axially outer side or the other axially outer side, the value of the angle θ2 is taken as a positive value. In other words, the angle θ2 is the absolute value of the angle formed by the equator plane CL and the second cord 40.

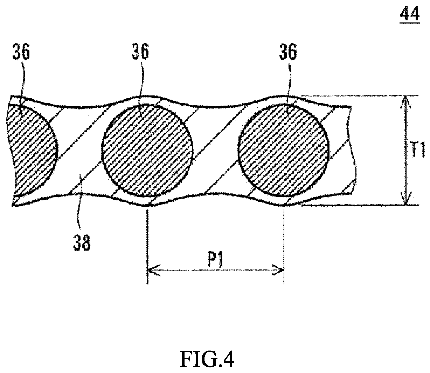

In the production of the tire 2, an elongated first rubber sheet 44 for the first ply 12a, and an elongated second rubber sheet for the second ply 12b, are prepared. FIG. 4 is a sectional view of the first rubber sheet 44. The first rubber sheet 44 includes the plurality of first cords 36 arranged in parallel and the topping rubber 38. Each first cord 36 is generally covered by the topping rubber 38. Each first cord 36 is inclined by substantially 90° relative to the longitudinal direction of the first rubber sheet 44. FIG. 4 shows a cross section perpendicular to the direction in which the first cords 36 extend. In other words, FIG. 4 is a sectional view of the first rubber sheet 44 taken along the longitudinal direction of the first rubber sheet 44.

In FIG. 4, a two-way arrow T1 represents the thickness of the first rubber sheet 44, and a two-way arrow P1 represents the pitch between first cords 36. The thickness T1 is preferably greater than or equal to 0.5 mm and less than or equal to 2.0 mm. The pitch P1 is greater than or equal to 0.8 mm and less than or equal to 2.0 mm.

Although not illustrated, the second rubber sheet includes the plurality of second cords 40 arranged in parallel and the topping rubber 42. Each second cord 40 is generally covered by the topping rubber 42. Each second cord 40 is inclined by 65° to 85° relative to the longitudinal direction of the second rubber sheet.

Preferably, the second rubber sheet has a thickness T2 of greater than or equal to 0.5 mm and less than or equal to 2.0 mm. Preferably, a pitch P2 between second cords 40 is greater than or equal to 0.8 mm and less than or equal to 2.0 mm.

In the production of the tire 2, the first rubber sheet 44 is wound on a drum of a former. The first rubber sheet 44 is wound on the outer periphery of the drum, such that the longitudinal direction of the first rubber sheet 44 is the circumferential direction of the drum. An angle that the direction in which the first cords 36 extend forms with the circumferential direction of the drum is substantially 90°. The second rubber sheet is wound on the outer side of the first rubber sheet 44. The second rubber sheet is wound on the outer side of the first rubber sheet 44, such that the longitudinal direction of the second rubber sheet is the circumferential direction of the drum. An angle that the direction in which the second cords 40 extend forms with the circumferential direction of the drum is greater than or equal to 65° and less than or equal to 85°.

Before the first rubber sheet 44 is wound on the drum, another sheet for forming another component of the tire 2 may be wound on the drum. For example, before the first rubber sheet 44 is wound on the drum, a sheet for the inner liner may be wound on the drum. In this case, the first rubber sheet 44 is wound on the outer side of the sheet for the inner liner.

The first rubber sheet 44 and the second rubber sheet are assembled with a plurality of other rubber members to obtain a raw cover (an unvulcanized tire). The raw cover is put into a mold. The raw cover is pressurized in the mold. The raw cover is deformed by the pressurization. The deformation is called shaping. The raw cover is further pressurized and heated in the mold. The pressurization and the heating cause the rubber composition of the raw cover to flow. Due to the heating, a crosslinking reaction of the rubber occurs, and thereby the tire 2 is obtained. The first ply 12a is formed by the first rubber sheet 44. The second ply 12b is formed by the second rubber sheet.

The shaping causes stretching of the first cords 36 and the second cords 40. From the viewpoint of achieving sufficient stretching, each first cord 36 is preferably an organic fiber stranded wire. Each first cord 36 is preferably obtained by twisting two or three yarns together. From the same viewpoint, each second cord 40 is preferably an organic fiber stranded wire. Each second cord 40 is preferably obtained by twisting two or three yarns together. In each cord, the fineness of each yarn is preferably greater than or equal to 500 dtex and less than or equal to 1000 dtex.

Hereinafter, functional advantages of the present embodiment are described.

In the tire 2 for a two-wheeled automotive vehicle, the carcass 12 includes the first ply 12a and the second ply 12b layered outward of the first ply 12a. In the first ply 12a, the angle θ1, which each first cord 36 forms with the equator plane CL, is substantially 90°. By setting the angle θ1 to 90°, twisting force applied to the first ply 12a can be reduced, and a shear stress between the first ply 12a and the second ply 12b can be reduced. In a case where the angle θ1 of each first cord 36 is 90°, in the vulcanizing step during the production, the cord angle hardly changes. Accordingly, a proper distance between first cords 36 is maintained. Further, in the tire 2, the angle θ2, which each second cord 40 of the second ply 12b forms with the equator plane CL, is greater than or equal to 65° and less than or equal to 85°. Since the second ply 12b is layered outward of the first ply 12a, an excellent hoop effect is obtained. These features make it possible to realize proper deflection of the tire 2 while reducing the vertical stiffness constant of the tire 2. Consequently, the handling performance is improved effectively. The tire 2 realizes excellent handling performance.

The reduced vertical stiffness constant and proper deflection effectively contribute to the cornering performance. The tire 2 realizes excellent cornering performance.

Inward of the tread 4 of the tire 2, the second ply 12b is positioned outward of the first ply 12a. The second ply 12b is closer to the tread surface 20 than the first ply 12a is. In the second ply 12b, the angle θ2, which each second cord 40 forms with the equator plane CL, is greater than or equal to 65° and less than or equal to 85°. In the tire 2, each second cord 40 is, in the traveling direction of the tire 2, inclined toward one axially outer side (the right side or the left side with respect to the traveling direction). Since the second cords 40, which are closer to the tread surface 20, are inclined, the second cords 40 make it possible to readily perform cornering in the direction in which the second cords 40 are inclined. Further, the first cords 36 are positioned farther from the tread surface 20 than the second cords 40 are, and the angle θ1 is substantially 90°. The first cords 36 are less likely to become a hindrance to the cornering performance during the cornering in the direction in which the second cords 40 are inclined. The tire 2 thus configured has improved cornering performance for the cornering in the direction in which the second cords 40 are inclined. For example, in a case where the two-wheeled automotive vehicle is to run on a circuit course that has many right corners, adopting the second ply 12b in which the second cords 40 are inclined toward the right side makes it possible for the two-wheeled automotive vehicle to run on the circuit course with a shorter lap time.

From the viewpoint of realizing excellent handling performance and cornering performance, the angle θ2 is more preferably greater than or equal to 70°, and yet more preferably greater than or equal to 72°. From the same viewpoint, the angle θ2 is more preferably less than or equal to 80°, and yet more preferably less than or equal to 78°.

Although not illustrated, there is an angle θ3, which is an angle formed by each first cord 36 and each second cord 40. From the viewpoint of realizing excellent handling performance and cornering performance, the angle θ3 is preferably greater than or equal to 5°, more preferably greater than or equal to 10°, and yet more preferably greater than or equal to 12°. From the same viewpoint, the angle θ3 is preferably less than or equal to 25°, more preferably less than or equal to 20°, and yet more preferably less than or equal to 18°.

It should be noted that an acute angle that is one of the angles formed by the first cord 36 and the second cord 40 is measured as the angle θ3. In one circumferential direction of the tire 2, regardless of whether the second cord 40 is inclined toward one axially outer side or the other axially outer side, the value of the angle θ3 is taken as a positive value. In other words, the angle θ3 is the absolute value of the angle formed by the first cord 36 and the second cord 40.

As previously described, preferably, the second ply 12b is turned up around each bead 10. The turned-up portion 34 of the second ply 12b contributes to proper stiffness of a side portion of the tire 2. At a position where the main portion 32 and the turned-up portion 34 of the second ply 12b overlap each other, the inclination direction of the second cords 40 of the main portion 32 and the inclination direction of the second cords 40 of the turned-up portion 34 are reversed from each other. Since the second cords 40 whose inclination directions are reversed from each other overlap each other, proper stiffness is achieved against forces from multiple directions. This feature, together with setting the inclination angles θ1 and θ2 within the above-described ranges, contributes to the realization of excellent handling performance and cornering performance.

As previously described, preferably, the first ply 12a is turned up around each bead 10. The turned-up portion 30 of the first ply 12a contributes to proper stiffness of the side portion of the tire 2. This feature, together with setting the inclination angles θ1 and θ2 within the above-described ranges, contributes to the realization of excellent handling performance and cornering performance.

As previously described, at the position where the main portion 32 and the turned-up portion 34 of the second ply 12b overlap each other, the second cords 40 whose inclination directions are reversed from each other overlap each other. The inclination angle θ2 of the second cords 40 is greater than or equal to 65° and less than or equal to 85°. Accordingly, an angle θ4, which is formed between the second cords 40 whose inclination directions are reversed from each other, is greater than or equal to 10° and less than or equal to 50°. From the viewpoint of realizing excellent handling performance and cornering performance, the difference between the angle θ4 and the angle θ3 (i.e., θ4 - θ3) is preferably greater than or equal to 5°, more preferably greater than or equal to 10°, and yet more preferably greater than or equal to 12°. From the same viewpoint, the difference (θ4 - θ3) is preferably less than or equal to 25°, more preferably less than or equal to 20°, and yet more preferably less than or equal to 18°.

A shown in FIG. 1, in the radial direction, the outer end of the turned-up portion 30 of the first ply 12a and the outer end of the turned-up portion 34 of the second ply 12b are preferably both positioned inward of an end of the tread surface 20. With this configuration, each of the turned-up portion 30 of the first ply 12a and the turned-up portion 34 of the second ply 12b is less likely to become a hindrance to the cornering performance during the cornering in the direction in which the second cords 40 are inclined. The tire 2 thus configured has improved cornering performance for the cornering in the direction in which the second cords 40 are inclined. Proper stiffness of the side portion and excellent cornering performance are realized by the tire 2.

In FIG. 1, a two-way arrow D1 represents a distance, in the radial direction, between the end of the tread surface 20 and the outer end of the turned-up portion 30 of the first ply 12a. The distance D1 is preferably greater than or equal to 5 mm. As a result of setting the distance D1 to be greater than or equal to 5 mm, the turned-up portion 30 of the first ply 12a is less likely to become a hindrance to the cornering performance. In light of this, the distance D1 is more preferably greater than or equal to 8 mm, and yet more preferably greater than or equal to 10 mm. The distance D1 is preferably less than or equal to 25 mm. As a result of setting the distance D1 to be less than or equal to 25 mm, the turned-up portion 30 of the first ply 12a contributes to proper stiffness of the side portion. In light of this, the distance D1 is more preferably less than or equal to 22 mm, and yet more preferably less than or equal to 20 mm.

In FIG. 1, a two-way arrow D2 represents a distance, in the radial direction, between the end of the tread surface 20 and the outer end of the turned-up portion 34 of the second ply 12b. The distance D2 is preferably greater than or equal to 1 mm. As a result of setting the distance D2 to be greater than or equal to 1 mm, the turned-up portion 34 of the second ply 12b is less likely to become a hindrance to the cornering performance. In light of this, the distance D2 is more preferably greater than or equal to 3 mm, and yet more preferably greater than or equal to 5 mm. The distance D2 is preferably less than or equal to 15 mm. As a result of setting the distance D2 to be less than or equal to 15 mm, the turned-up portion 34 of the second ply 12b contributes to proper stiffness of the side portion. In light of this, the distance D2 is more preferably less than or equal to 12 mm, and yet more preferably less than or equal to 10 mm.

As shown in FIG. 1, in the radial direction, the outer end of the turned-up portion 34 of the second ply 12b is positioned outward of the outer end of the turned-up portion 30 of the first ply 12a. The turned-up portion 34 of the second ply 12b is positioned further inward of the tire 2 than the turned-up portion 30 of the first ply 12a. Accordingly, even if the turned-up portion 34 of the second ply 12b is elongated radially outward, the turned-up portion 34 is less likely to become a hindrance to the cornering performance. Here, by making the turned-up portion 34 of the second ply 12b elongated radially outward, the width of an overlapping portion where the main portion 32 and the turned-up portion 34 of the second ply 12b overlap each other can be made elongated. As a result, a portion where the second cords 40 whose inclination directions are reversed from each other overlap each other is elongated. In this manner, proper stiffness against forces from multiple directions can be achieved more effectively.

In FIG. 1, a two-way arrow L represents a distance, in the radial direction, between the outer end of the turned-up portion 30 of the first ply 12a and the outer end of the turned-up portion 34 of the second ply 12b. From the viewpoint of realizing high cornering performance and proper stiffness, the distance L is preferably greater than or equal to 1 mm, and more preferably greater than or equal to 3 mm, and yet more preferably greater than or equal to 5 mm. From the same viewpoint, the distance L is preferably less than or equal to 15 mm, more preferably less than or equal to 12 mm, and yet more preferably less than or equal to 10 mm.

In FIG. 1, a straight line BBL represents the bead base line of the tire 2. A two-way arrow H represents the section height of the tire. The section height H is the height of the tire in the radial direction, the height being measured on the equator from the bead base line BBL. A two-way arrow HP1 represents the height of the turned-up portion 30 of the first ply 12a in the radial direction, the height being measured from the bead base line BBL. A two-way arrow HP2 represents the height of the turned-up portion 34 of the second ply 12b in the radial direction, the height being measured from the bead base line BBL.

The ratio (HP1 / H) of the height HP1 to the section height H is preferably greater than or equal to 0.10. As a result of setting the ratio (HP1 / H) to be greater than or equal to 0.10, the turned-up portion 30 of the first ply 12a contributes to proper stiffness of the side portion. In light of this, the ratio (HP1 / H) is more preferably greater than or equal to 0.15, and yet more preferably greater than or equal to 0.20. The ratio (HP1 / H) is preferably less than or equal to 0.35. As a result of setting the ratio (HP1 / H) to be less than or equal to 0.35, the turned-up portion 30 of the first ply 12a is less likely to become a hindrance to the cornering performance. In light of this, the ratio (HP1 / H) is more preferably less than or equal to 0.30, and yet more preferably less than or equal to 0.25.

The ratio (HP2 / H) of the height HP2 to the section height H is preferably greater than or equal to 0.15. As a result of setting the ratio (HP2 / H) to be greater than or equal to 0.15, the turned-up portion 34 of the second ply 12b contributes to proper stiffness of the side portion. In light of this, the ratio (HP2 / H) is more preferably greater than or equal to 0.20, and yet more preferably greater than or equal to 0.25. The ratio (HP2 / H) is preferably less than or equal to 0.40. As a result of setting the ratio (HP2 / H) to be less than or equal to 0.40, the turned-up portion 34 of the second ply 12b is less likely to become a hindrance to the cornering performance. In light of this, the ratio (HP2 / H) is more preferably less than or equal to 0.35, and yet more preferably less than or equal to 0.30.

The dimensions and angles of the components of the tire 2 are measured in a state where the tire 2 is incorporated in a normal rim and inflated with air to a normal internal pressure. During the measurement, no load is applied to the tire 2. In the present specification, the term "normal rim" means a rim specified according to a standard on which the tire 2 is based. The "standard rim" in the JATMA standard, the "Design Rim" in the TRA standard, and the "Measuring Rim" in the ETRTO standard are normal rims. In the present specification, the term "normal internal pressure" means an internal pressure specified according to a standard on which the tire 2 is based. The "maximum air pressure" in the JATMA standard, the "maximum value" indicated in "TIRE LOAD LIMITS AT VARIOUS COLD INFLATION PRESSURES" in the TRA standard, and the "INFLATION PRESSURE" in the ETRTO standard are normal internal pressures.

### EXAMPLES

The following elucidates the advantageous effects of the tire for a two-wheeled automotive vehicle according to Examples. However, the scope of the disclosure in the present specification should not be restrictively construed based on the description of the Examples.

### [Example 1]

A tire for a two-wheeled automotive vehicle according to Example 1, the tire having the structure shown in FIG. 1, was obtained. The size of the tire was 120/70R17. The angles θ1 and θ2 of the tire are shown in Table 1.

### [Comparative Examples 1 to 5 and Examples 2 to 5]

In each of Comparative Examples 1 to 5 and each of Examples 2 to 5, a tire was obtained in the same manner as in Example 1, except that the angles θ1 and θ2 were varied as shown in Tables 1 and 2.

### [Measurement of Vertical Stiffness Constant]

The vertical stiffness constant was measured for each of the tires of Example 1 and Comparative Examples 1 to 3 under the conditions indicated below.
The size of a rim used: MT3.50 × 17
Internal pressure: 230kPa
Load T: 0.54 kN, 1.1 kN, 1.6 kN
Camber angle Ca: 0 to 50°

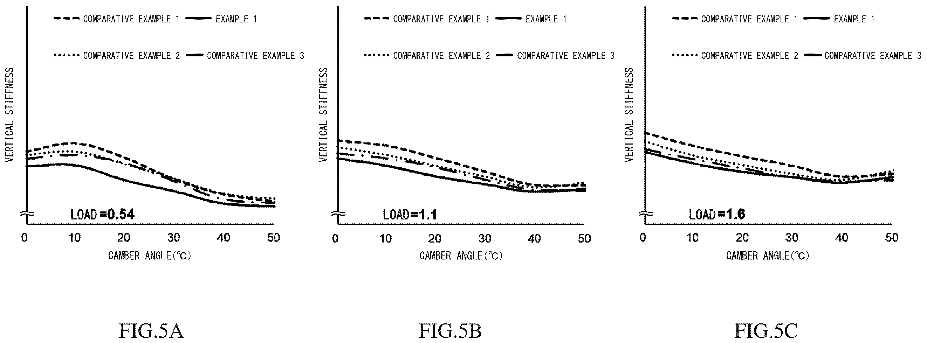

Measurement results of the vertical stiffness constant when the camber angle Ca was varied from 0° to 50° are shown in each of FIGS. 5A to 5C. FIG. 5A shows the measurement results when the load T was 0.54 kN. FIG. 5B shows the measurement results when the load T was 1.1 kN. FIG. 5C shows the measurement results when the load T was 1.6 kN. The measurement results when the load T was 0.54 kN and the camber angle Ca was 20° are shown in Table 1 as indexes, with the measurement result of Comparative Example 1 being shown as an index of 100. The less the vertical stiffness constant, the higher the handling performance and cornering performance. The less the vertical stiffness constant, the more preferable it is. It should be noted that the scale of the vertical axis differs among FIG. 5A, FIG. 5B, and FIG. 5C. Therefore, for example, FIG. 5A and FIG. 5B cannot be compared with each other. Each of FIGS. 5A, 5B, and 5C is intended for, in its own graph, comparing Example 1 and Comparative Examples 1 to 3.

### [Deflection Amount Measurement]

A deflection amount was measured for each of the tires of Example 1 and Comparative Examples 1 to 3 under conditions indicated below. The deflection amount was calculated as a difference between the section height of the tire when no load was applied thereto and the section height of the tire when a load was applied thereto.
The size of a rim used: MT3.50 × 17
Internal pressure: 230kPa
Load T: 0.54 kN, 1.1 kN, 1.6 kN
Camber angle Ca: 0 to 50°

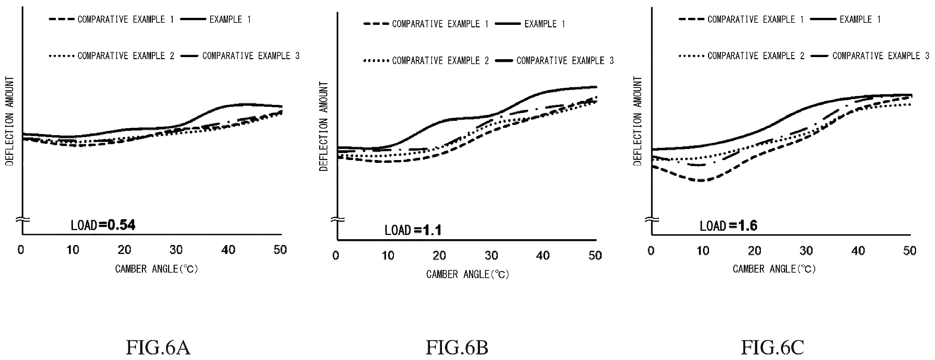

Measurement results of the deflection amount when the camber angle Ca was varied from 0° to 50° are shown in each of FIGS. 6A to 6C. FIG. 6A shows the measurement results when the load T was 0.54 kN. FIG. 6B shows the measurement results when the load T was 1.1 kN. FIG. 6C shows the measurement results when the load T was 1.6 kN. The measurement results when the load T was 0.54 kN and the camber angle Ca was 20° are shown in Table 1 as indexes, with the measurement result of Comparative Example 1 being shown as an index of 100. The greater the deflection amount, the higher the handling performance and cornering performance. The greater the deflection amount, the more preferable it is. It should be noted that the scale of the vertical axis differs among FIG. 6A, FIG. 6B, and FIG. 6C. Therefore, for example, FIG. 6A and FIG. 6B cannot be compared with each other. Each of FIG. 6A, FIG. 6B, and FIG. 6C is intended for, in its own graph, comparing Example 1 and Comparative Examples 1 to 3.

### [Handling Performance]

Each of the above tires was incorporated in a normal rim (rim size = MT 3.50 × 17), and mounted to the front wheel of a two-wheeled automotive vehicle having an engine displacement of 1000 cc. The tire thus mounted was inflated with air to an internal pressure of 200 kPa. A conventional tire was mounted to the rear wheel of the two-wheeled automotive vehicle. A rider ran the two-wheeled automotive vehicle on a circuit course, and made sensory evaluation. Handling performance was evaluated by the sensory evaluation. The evaluation results are shown in Tables 1 to 2 with four grades of A, B, C, and D. The handling performance was graded by the grades in alphabetical order of A, B, C, and D, with A being the highest and D being the lowest, i.e., with A being the most preferable and D being the least preferable.

**[Table 1]**

| Table 1: Evaluation Results | | | | |
|---|---|---|---|---|
| | Example 1 | Comparative Example 1 | Comparative Example 2 | Comparative Example 3 |
| Angle θ1 [°] | 90 | 70 | 80 | 70 |
| Angle θ2 [°] | 70 | 70 | 80 | 90 |
| Vertical stiffness (T = 0.54, Ca = 20°) | 89 | 100 | 97 | 97 |
| Deflection amount (T = 0.54, Ca = 20°) | 109 | 100 | 97 | 97 |
| Handling Performance | A | C | C | D |

**[Table 2]**

| Table 2: Evaluation Results | | | | | | |
|---|---|---|---|---|---|---|
| | Comparative Example 4 | Example 2 | Example 3 | Example 4 | Example 5 | Comparative Example 5 |
| Angle θ1 [°] | 90 | 90 | 90 | 90 | 90 | 90 |
| Angle θ2 [°] | 60 | 65 | 75 | 80 | 85 | 90 |
| Handling Performance | C | B | A | A | B | C |

As shown in FIGS. 5A to 6C and Tables 1 to 2, the tires of the Examples are superior to the tires of the Comparative Examples in terms of handling performance. These evaluation results clearly indicate the superiority of the tire for a two-wheeled automotive vehicle according to the present invention.

### Industrial Applicability

The above-described tire is applicable to various two-wheeled automotive vehicles.

### Reference Signs List

- 2: tire
- 4: tread
- 6: sidewall
- 8: wing
- 10: bead
- 12: carcass
- 12a: first ply
- 12b: second ply
- 14: band
- 16: inner liner
- 18: chafer
- 20: tread surface
- 22: groove
- 24: core
- 26: apex
- 28, 32: main portion
- 30, 34: turned-up portion
- 36: first cord
- 38, 42: topping rubber
- 40: second cord
- 44: first rubber sheet

## Claims

1. A tire (2) for a two-wheeled automotive vehicle, the tire (2) comprising:
a pair of beads (10); and
a carcass (12) that is extended on and between the beads (10), wherein
the carcass (12) includes:
a first ply (12a) including a plurality of first cords (36) arranged in parallel; and
a second ply (12b) layered outward of the first ply (12a) and including a plurality of second cords (40) arranged in parallel,
the first cords (36) are inclined relative to an equator plane (CL), and each of the first cords (36) forms an angle θ1 relative to the equator plane, and
the second cords (40) are inclined relative to the equator plane (CL), and each of the second cords (40) forms an angle θ2 relative to the equator plane (CL), the angle θ2 being greater than or equal to 65° and less than or equal to 85°;
wherein
the second ply (12b) is turned up around each of the beads (10), such that the second ply (12) includes turned-up portions (34) formed around the respective beads (10); and
the first ply (12a) is turned up around each of the beads (10), such that the first ply (12a) includes turned-up portions (30) formed around the respective beads (10),
**characterized in that**
in a radial direction, an outer end of each turned-up portion (34) of the second ply (12b) is positioned outward of an outer end of each turned-up portion (30) of the first ply (12a), and
the angle θ1 is greater than or equal to 87° and less than or equal to 90°.

2. The tire for a two-wheeled automotive vehicle according to claim 1, wherein
the angle θ2 is greater than or equal to 70° and less than or equal to 80°.

3. The tire for a two-wheeled automotive vehicle according to claim 1 or 2, further comprising a tread (4) including a tread surface (20) that comes into contact with a road surface, wherein
in a radial direction, an outer end of each turned-up portion (30) of the first ply (12a) and an outer end of each turned-up portion (34) of the second ply (12b) are both positioned inward of an end of the tread surface (20).

4. The tire for a two-wheeled automotive vehicle according to any one of claims 1 to 3, wherein
in a radial direction,
a ratio of a height (HP1) of each turned-up portion (30) of the first ply (12a) to a section height (H) of the tire (2) is greater than or equal to 0.10 and less than or equal to 0.35, and
a ratio of a height (HP2) of each turned-up portion (34) of the second ply (12b) to the section height (H) of the tire (2) is greater than or equal to 0.15 and less than or equal to 0.40.

## Patentansprüche

1. Reifen (2) für ein zweirädriges Kraftfahrzeug, wobei der Reifen (2) umfasst:
ein Paar Wülste (10); und
eine Karkasse (12), die sich auf und zwischen den Wülsten (10) erstreckt, wobei die Karkasse (12) umfasst:
eine erste Lage (12a), die eine Vielzahl von parallel angeordneten ersten Korden (36) umfasst; und
eine zweite Lage (12b), die außen von der ersten Lage (12a) geschichtet ist und eine Vielzahl von parallel angeordneten zweiten Korden (40) umfasst,
wobei die ersten Korde (36) relativ zu einer Äquatorebene (CL) geneigt sind und jeder der ersten Korde (36) einen Winkel θ1 relativ zu der Äquatorebene bildet, und
wobei die zweiten Korde (40) relativ zu der Äquatorebene (CL) geneigt sind und jeder der zweiten Korde (40) einen Winkel θ2 relativ zu der Äquatorebene (CL) bildet, wobei der Winkel θ2 größer als oder gleich 65° und kleiner als oder gleich 85° ist;
wobei
die zweite Lage (12b) um jeden der Wülste (10) umgeschlagen ist, so dass die zweite Lage (12) Umschlagabschnitte (34) umfasst, die um die jeweiligen Wülste (10) herum gebildet sind; und
die erste Lage (12a) um jeden der Wülste (10) umgeschlagen ist, so dass die erste Lage (12a) Umschlagabschnitte (30) umfasst, die um die jeweiligen Wülste (10) herum gebildet sind,
**dadurch gekennzeichnet, dass**
in einer radialen Richtung ein äußeres Ende jedes Umschlagabschnitts (34) der zweiten Lage (12b) außen von einem äußeren Endes jedes Umschlagabschnitts (30) der ersten Lage (12a) positioniert ist, und
der Winkel θ1 größer als oder gleich 87° und kleiner als oder gleich 90° ist.

2. Reifen für ein zweirädriges Kraftfahrzeug nach Anspruch 1, wobei der Winkel θ2 größer als oder gleich 70° und kleiner als oder gleich 80° ist.

3. Reifen für ein zweirädriges Kraftfahrzeug nach Anspruch 1 oder 2, ferner umfassend eine Lauffläche (4), die eine Laufflächenoberfläche (20) umfasst, die mit einer Straßenoberfläche in Kontakt kommt, wobei
in einer radialen Richtung ein äußeres Ende jedes Umschlagabschnitts (30) der ersten Lage (12a) und ein äußeres Ende jedes Umschlagabschnitts (34) der zweiten Lage (12b) beide innen von einem Ende der Laufflächenoberfläche (20) positioniert sind.

4. Reifen für ein zweirädriges Kraftfahrzeug nach einem der Ansprüche 1 bis 3, wobei
in einer radialen Richtung
ein Verhältnis einer Höhe (HP1) jedes Umschlagabschnitts (30) der ersten Lage (12a) zu einer Querschnittshöhe (H) des Reifens (2) größer als oder gleich 0,10 und kleiner als oder gleich 0,35 ist, und
ein Verhältnis einer Höhe (HP2) jedes Umschlagabschnitts (34) der zweiten Lage (12b) zu der Querschnittshöhe (H) des Reifens (2) größer als oder gleich 0,15 und kleiner als oder gleich 0,40 ist.

## Revendications

1. Pneumatique (2) pour un véhicule automobile à deux roues, le pneumatique (2) comprenant :
une paire de talons (10) ; et
une carcasse (12) qui s'étend sur et entre les talons (10), dans lequel la carcasse (12) inclut :
une première nappe (12a) incluant une pluralité de premiers câblés (36) agencés en parallèle ; et
une seconde nappe (12b) disposée en couche à l'extérieur de la première nappe (12a) et incluant une pluralité de second câblés (40) agencés en parallèle ;
les premiers câblés (36) sont inclinés relativement à un plan d'équateur (CL), et chacun des premiers câblés (36) forme un angle θ1 relativement au plan d'équateur, et
les seconds câblés (40) sont inclinés relativement au plan d'équateur (CL), et chacun des seconds câblés (40) forme un angle θ2 relativement au plan d'équateur (CL), l'angle θ2 étant supérieur ou égal à 65° et inférieur ou égal à 85° ;
dans lequel
la seconde nappe (12b) est retroussée autour de chacun des talons (10), de telle sorte que la seconde nappe (12b) inclut des portions retroussées (34) formées autour des talons (10) respectifs ; et
la première nappe (12a) est retroussée autour de chacun des talons (10), de telle sorte que la première nappe (12a) inclut des portions retroussées (30) formées autour des talons (10) respectifs,
**caractérisé en ce que**
dans une direction radiale, une extrémité extérieure de chaque portion retroussée (34) de la seconde nappe (12b) est positionnée à l'extérieur d'une extrémité extérieure de chaque portion retroussée (30) de la première nappe (12a), et
l'angle θ1 est supérieur ou égal à 87° et inférieur ou égal à 90°.

2. Pneumatique pour un véhicule automobile à deux roues selon la revendication 1, dans lequel
l'angle θ2 est supérieur ou égal à 70° et inférieur ou égal à 80°.

3. Pneumatique pour un véhicule automobile à deux roues selon la revendication 1 ou 2, comprenant en outre une bande de roulement (4) incluant une surface de bande de roulement (20) qui vient en contact avec une surface routière, dans lequel
dans une direction radiale, une extrémité extérieure de chaque portion retroussée (30) de la première nappe (12a) et une extrémité extérieure de chaque portion retroussée (34) de la seconde nappe (12b) sont toutes deux positionnées à l'intérieur d'une extrémité de la surface de bande de roulement (20).

4. Pneumatique pour un véhicule automobile à deux roues selon l'une quelconque des revendications 1 à 3, dans lequel
dans une direction radiale,
un rapport d'une hauteur (HP1) de chaque portion retroussée (30) de la première nappe (12a) sur une hauteur de section (H) du pneumatique (2) est supérieur ou égal à 0,10 et inférieur ou égal à 0,35, et
un rapport d'une hauteur (HP2) de chaque portion retroussée (34) de la seconde nappe (12b) sur la hauteur de section (H) du pneumatique (2) est supérieur ou égal à 0,15 et inférieur ou égal à 0,40.
